# EUROPÄISCHE PATENTANMELDUNG

(11) **EP 4 105 500 A1**
(43) Veröffentlichungstag der Anmeldung: **21.12.2022**
(21) Anmeldenummer: 22178832.6
(22) Anmeldetag: 14.06.2022
(51) Int. Cl.: F16C 19/06, F16C 25/08, F16C 19/54

(54) **LAGERANORDNUNG**

(30) Priorität: 17.06.2021 DE 102021115732
(71) Anmelder: Ebm-Papst St. Georgen GmbH & CO. KG, 78112 St. Georgen im Schwarzwald (DE)
(72) Erfinder: Ghodsi-Khameneh, Hassan, 78112 St. Georgen (DE)
(74) Vertreter: Otten, Roth, Dobler & Partner mbB Patentanwälte

(57) **Zusammenfassung**

Lageranordnung umfassend ein Festlager, ein Loslager, ein erstes Federelement und ein zweites Federelement, wobei das Festlager ein erstes Lagerorgan, ein zweites Lagerorgan und ein erstes Lagerelement umfasst, wobei das erste Lagerelement zwischen dem ersten und dem zweiten Lagerorgan des Festlagers beweglich gelagert ist, wobei das Loslager ein erstes Lagerorgan, ein zweites Lagerorgan und ein zweites Lagerelement umfasst, wobei das zweite Lagerelement zwischen dem ersten und dem zweiten Lagerorgan des Loslagers beweglich gelagert ist, wobei das erste Federelement ein erstes Ende und ein dem ersten Ende gegenüberliegendes zweites Ende aufweist, wobei das erste Federelement zwischen dem ersten Lagerorgan des Festlagers und dem ersten Lagerorgan des Loslagers angeordnet ist und mit dem ersten Ende am ersten Lagerorgan des Festlagers und mit dem zweiten Ende am ersten Lagerorgan des Loslagers angreift, wobei das zweite Federelement ein erstes Ende aufweist und mit dem ersten Ende am ersten Lagerorgan des Loslagers angreifend angeordnet ist, wobei das Loslager zwischen dem ersten Federelement und dem zweiten Federelement vorhanden ist, sodass die beiden Federelemente gegenüberliegend und voneinander beabstandet vorhanden sind.

## Beschreibung

Die Erfindung betrifft eine Lageranordnung, ein Wellenlager mit einer solchen Lageranordnung, sowie ein Gebläse mit einem solchen Wellenlager.

### Stand der Technik

Lageranordnungen in Form von Radiallagern oder Axiallagern sind bereits bekannt. Ein bekanntes Radiallager umfasst ein Loslager, ein Festlager und ein Federelement, wobei das Federelement das Loslager mit einer Federkraft beaufschlagt.

Nachteilig an derartigen Radiallagern ist, dass bei insbesondere vergleichsweise hohen Drehzahlen eine Verdrehung der Lager, insbesondere des Loslagers stattfindet.

### Aufgabe und Vorteile der Erfindung

Der Erfindung liegt die Aufgabe zugrunde, eine verbesserte Lageranordnung bereitzustellen, insbesondere eine verbesserte Radiallageranordnung bereitzustellen. Insbesondere eine verbesserte Lageranordnung bereitzustellen, welche auch bei vergleichsweise hohen Drehzahlen im angeordneten Zustand an einer Welle gegen eine Verdrehung gesichert ist.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Lageranordnung umfassend ein Festlager, ein Loslager und ein erstes Federelement aus.

Vorteilhafterweise ist die Lageranordnung als eine Wellenlageranordnung, z.B. als ein Wellenlager oder als ein Drehlager, ausgebildet. Beispielsweise ist die Lageranordnung in Form eines Radiallagers vorhanden.

Der wesentliche Aspekt der Erfindung ist nun darin zu sehen, dass die Lageranordnung ein zweites Federelement umfasst, wobei das Festlager ein erstes Lagerorgan, ein zweites Lagerorgan und ein erstes Lagerelement umfasst, wobei das erste Lagerelement zwischen dem ersten und dem zweiten Lagerorgan des Festlagers beweglich gelagert ist, wobei das Loslager ein erstes Lagerorgan, ein zweites Lagerorgan und ein zweites Lagerelement umfasst, wobei das zweite Lagerelement zwischen dem ersten und dem zweiten Lagerorgan des Loslagers beweglich gelagert ist, wobei das erste Federelement ein erstes Ende und ein dem ersten Ende gegenüberliegendes zweites Ende aufweist, wobei das erste Federelement zwischen dem ersten Lagerorgan des Festlagers und dem ersten Lagerorgan des Loslagers angeordnet ist, wobei das erste Federelement mit seinem ersten Ende am ersten Lagerorgan des Festlagers und mit seinem zweiten Ende am ersten Lagerorgan des Loslagers angreift, wobei das zweite Federelement ein erstes Ende aufweist und mit dem ersten Ende am ersten Lagerorgan des Loslagers angreifend angeordnet ist, wobei das Loslager zwischen dem ersten Federelement und dem zweiten Federelement vorhanden ist, sodass die beiden Federelemente gegenüberliegend und voneinander beabstandet vorhanden sind. Hierdurch ist eine Lageranordnung bereitgestellt, welche im angeordneten Zustand an einer Welle gegen ein Verdrehen relativ zur Drehrichtung gesichert ist. Hierdurch ist insbesondere eine Lageranordnung realisiert, welche bei insbesondere hohen Drehzahlen der Welle, an welcher die Lageranordnung angeordnet ist, gegen ein Verdrehen relativ zur Drehrichtung gesichert ist.

Vorteilhafterweise ist hierdurch eine Lageranordnung realisiert, bei welcher im angeordneten Zustand an der Welle, das Loslager gegen ein Verdrehen relativ zur Drehrichtung, bei insbesondere hohen Drehzahlen der Welle, gesichert ist. Denkbar ist, dass hierdurch im angeordneten Zustand der Lageranordnung auftretende Reibungskräfte beeinflussbar sind, insbesondere einstellbar. Beispielsweise sind hierdurch im angeordneten Zustand der Lageranordnung auftretende Reibungskräfte zwischen dem Loslager und der Welle und/oder dem Wellenlagergehäuse beeinflussbar. Vorteilhafterweise sind die Reibungskräfte zwischen dem Loslager und der Welle und/oder dem Wellenlagergehäuse abhängig von einer Drehzahl der Welle. Durch die wesentlichen Merkmale der Erfindung kann die Lageranordnung derart abgestimmt werden, dass im angeordneten Zustand der Lageranordnung ein Verdrehen des ersten Lagerorgans des Loslagers relativ zum Wellenlagergehäuse bei vergleichsweise hohen Drehzahlen aufgrund vergleichsweise erhöhter Reibung zwischen dem ersten Lagerorgan des Loslagers und dem Wellenlagergehäuse verhindert ist.

Beispielsweise ist das erste und das zweite Lagerorgan des Festlager jeweils als ein Lagerring ausgebildet. Bevorzugterweise ist das erste Lagerorgan des Festlagers als ein Innenring und das zweite Lagerorgan des Festlagers als ein Außenring eines Festlagers vorhanden. Beispielsweise ist das erste und das zweite Lagerorgan des Loslagers jeweils als ein Lagerring ausgebildet. Zum Beispiel ist das erste Lagerorgan des Loslagers als ein Innenring und das zweite Lagerorgan des Loslagers als ein Außenring eines Loslagers vorhanden. Beispielsweise ist ein Lagerorgan des Festlagers und/oder des Loslagers als ein Lagerkranz oder als eine Lagerschale ausgebildet. Zum Beispiel sind beide Lagerorgane des Festlagers und/oder des Loslagers als ein Lagerkranz oder als eine Lagerschale ausgebildet.

Denkbar ist jedoch auch der umgekehrte Fall, dass das zweite Lagerorgan des Festlagers als ein Innenring und das erste Lagerorgan des Festlagers als ein Außenring eines Festlagers vorhanden ist und das zweite Lagerorgan des Loslagers als ein Innenring und das erste Lagerorgan des Loslagers als ein Außenring eines Loslagers vorhanden ist.

Beispielsweise sind das erste und das zweite Lagerorgan des Festlagers durch das erste Lagerelements zueinander rotationsbeweglich gelagert. Zum Beispiel sind das erste und das zweite Lagerorgan des Loslagers mittels des zweiten Lagerelements zueinander rotationsbeweglich gelagert.

Beispielsweise ist das erste Federelement als eine Druckfeder ausgebildet. Beispielsweise ist das zweite Federelement als eine Druckfeder ausgebildet. Vorstellbar ist jedoch auch, dass das erste und das zweite Federelement jeweils als eine Zugfeder vorhanden ist. Denkbar ist, dass das erste und/oder das zweite Federelement als eine Schraubenfeder ausgebildet ist. Zum Beispiel ist das erste und/oder das zweite Federelement als eine Tellerfeder ausgebildet. Beispielsweise ist das erste Federelement und/oder das zweite Federelement als ein Tellerfederpaket umfassend zwei oder mehr Tellerfedern ausgebildet. Ebenfalls erweist es sich von Vorteil, wenn das erste und das zweite Federelement verschieden ausgebildet sind.

Auch wird vorgeschlagen, dass eine Federkonstante des ersten Federelements größer ist, als eine Federkonstante des zweiten Federelements. Vorstellbar ist auch, dass eine Federkonstante des ersten Federelements kleiner ist, als eine Federkonstante des zweiten Federelements. Vorteilhafterweise sind die Federkonstanten des ersten und des zweiten Federelements zueinander verschieden.

Beispielsweise sind durch ein definiertes Verhältnis der Federkonstante des ersten Federelements zur Federkonstante des zweiten Federelements Reibungskräfte zwischen dem zweiten Lagerelement und dem Loslager, in welchem das zweite Lagerelement gelagert ist, vorgebbar. Zum Beispiel sind durch ein definiertes Verhältnis der Federkonstante des ersten Federelements zur Federkonstante des zweiten Federelements Reibungskräfte zwischen dem zweiten Lagerelement und dem ersten Lagerorgan des Loslagers, in welchem das zweite Lagerelement gelagert ist, vorgebbar.

Auch erweist es sich von Vorteil, dass im angeordneten Zustand der Lageranordnung eine Kraft des ersten Federelements auf das erste Lagerorgan des Loslagers größer ist, als eine Kraft des zweiten Federelements auf das erste Lagerorgan des Loslagers. Beispielsweise ist im angeordneten Zustand der Lageranordnung eine Federkraft des ersten Federelements auf das erste Lagerorgan des Loslagers größer, als ein Federkraft des zweiten Federelements auf das erste Lagerorgan des Loslagers. Zum Beispiel besitzt die Kraft des ersten Federelements und/oder des zweiten Federelements auf das Loslager, beispielsweise ausschließlich, eine Kraftrichtung entlang oder parallel einer Verbindungslinie des Festlagers mit dem Loslager. Beispielsweise ist der Betrag der Federkraft des ersten Federelements auf das erste Lagerorgan des Loslagers verschieden zum Betrag der Federkraft des zweiten Federelements auf das erste Lagerorgan des Loslagers.

Denkbar ist auch, dass im angeordneten Zustand der Lageranordnung eine Kraft des ersten Federelements auf das erste Lagerorgan des Loslagers kleiner ist, als eine Kraft des zweiten Federelements auf das erste Lagerorgan des Loslagers. Hierdurch ist im angeordneten Zustand der Lageranordnung an der Welle eine Verschiebung des Loslagers in axialer Richtung der Welle, relativ zum Festlager realisierbar.

Ebenfalls ist es von Vorteil, dass im angeordneten Zustand der Lageranordnung die Kraft des ersten Federelements auf das erste Lagerorgan des Loslagers und die Kraft des zweiten Federelements auf das erste Lagerorgan des Loslagers entgegengesetzt gerichtet vorhanden sind. Beispielsweise sind die Federkräfte des ersten und des zweiten Federelements auf das Loslager, zum Beispiel auf das erste Lagerorgan des Loslagers, zueinander parallel ausgerichtet vorhanden. Hierdurch ist eine Position des ersten Lagerorgans in axialer Richtung, insbesondere bei vergleichsweise hohen Kräften, welche in axialer Richtung auf das erste Lagerorgan im angeordneten Zustand wirken, vergleichsweise stabil.

Beispielsweise übt im angeordneten Zustand der Lageranordnung das erste Federelement auf das erste Lagerorgan des Loslagers eine Kraft parallel zu einer Rotationsachse des Loslagers und/oder zu einer Rotationsachse des Festlagers aus. Beispielsweise übt im angeordneten Zustand der Lageranordnung das erste Federelement auf das erste Lagerorgan des Festlagers eine Kraft parallel zu der Rotationsachse des Festlagers und/oder zu der Rotationsachse des Loslagers aus.

Aufgrund der entgegengesetzt gerichteten Federkräfte des ersten und des zweiten Federelements am Loslager ist im angeordneten Zustand der Lageranordnung eine Reibungskraft zwischen dem zweiten Lagerelement und dem ersten Lagerorgan des Loslagers bei vergleichsweise hohen Drehzahlen erhöht, wodurch das Loslager gegen ein Verdrehen bei hohen Drehzahlen gehalten ist. Beispielsweise ist aufgrund der erhöhten Reibungskraft zwischen dem zweiten Lagerelement und dem ersten Lagerorgan des Loslagers damit auch eine Reibungskraft zwischen dem ersten Lagerorgan des Loslagers und einem Lagersitz des ersten Lagerorgans an der Welle oder einem Lagersitz des ersten Loslagers an der Welle erhöht, wodurch das Loslager, insbesondere das erste Lagerorgan des Loslagers, gegen ein Verdrehen vergleichsweise verbessert gesichert ist.

Beispielsweise entspricht eine resultierende Kraft des ersten und des zweiten Federelements auf das Loslager einer zulässigen Federvorspannkraft des Loslagers. Beispielsweise entspricht eine resultierende Kraft des ersten und des zweiten Federelements auf das erste Lagerorgan des Loslagers einer zulässigen Federvorspannkraft des Loslagers. Beispielsweise entspricht die resultierende Kraft des ersten und des zweiten Federelements auf das Loslager einem Bereich zwischen 3N und 60N, z.B. zwischen 3N und 30N, z.B. einem Bereich zwischen 6N und 24N, z.B. einem Bereich zwischen 8N und 18N. Beispielsweise entspricht die resultierende Kraft des ersten und des zweiten Federelements auf das Loslager 3N, 6N, 8N, 10N, 14N, 16N, 18N, 24N oder 30N. Insbesondere entspricht die resultierende Kraft des ersten und des zweiten Federelements auf das Loslager 12N.

Beispielsweise liegt eine Kraft des ersten Federelements auf das Loslager in einem Bereich zwischen 10N und 60N, z.B. in einem Bereich zwischen 15N und 40N. Beispielsweise entspricht eine Kraft des ersten Federelements auf das Loslager 10N, 15N, 40N oder 60N. Zum Beispiel entspricht eine Kraft des ersten Federelements auf das Loslager 24N.

Beispielsweise liegt eine Kraft des zweiten Federelements auf das Loslager in einem Bereich zwischen 20N und 70N, z.B. in einem Bereich zwischen 25N und 60N. Beispielsweise entspricht eine Kraft des ersten Federelements auf das Loslager 20N, 25N 60N oder 70N. Zum Beispiel entspricht eine Kraft des ersten Federelements auf das Loslager 36N.

Weiter erweist es sich von Vorteil, dass das erste Lagerelement und/oder das zweite Lagerelement als eine Kugel eines Kugellagers ausgebildet ist. Vorteilhafterweise sind mehrere erste und/oder zweite Lagerelemente vorhanden. Beispielsweise sind die mehrere ersten und/oder die mehreren zweiten Lageelemente identisch ausgebildet oder besitzen die gleichen Spezifikationen. Denkbar ist auch, dass das erste und/oder das zweite Lagerelement als ein zylindrischer Lagerkörper eines Wälzlagers ausgebildet ist. Beispielsweise ist das Loslager und/oder das Festlager in Form eines Radialkugellagers vorhanden.

In einer beispielhaften Ausführungsform der Lageranordnung ist das erste Lagerelement zum zweiten Lagerelement verschieden. Beispielsweise ist das erste Lagerelement im Hinblick auf eine Spezifikation, z.B. eine Toleranz, eine Größe, z.B. ein Durchmesser, und/oder eine Form, verschieden zum zweiten Lagerelement. Hierdurch sind im angeordneten Zustand der Lageranordnung auftretende Reibungskräfte beeinflussbar, insbesondere einstellbar.

Denkbar ist auch, dass das erste Lagerelement und das zweite Lagerelement gleich ausgebildet sind. Z.B. sind das erste Lagerelement und das zweite Lagerelement identisch, insbesondere im Hinblick auf eine Spezifikation, wie eine Toleranz, eine Größe, z.B. ein Durchmesser, und/oder eine Form.

Weiter wird vorgeschlagen, dass eine erste Lageraufnahme des ersten und des zweiten Lagerorgans des Festlagers verschieden ist, zu einer zweiten Lageraufnahme des ersten und des zweiten Lagerorgans des Loslagers, wobei in der ersten Lageraufnahme das erste Lagerelement gelagert ist, wobei in der zweiten Lageraufnahme das zweite Lagerelement gelagert ist. Beispielsweise ist eine Lageraufnahme als eine Kugelbahn oder Wälzkörperbahn ausgebildet. Hierdurch sind im angeordneten Zustand der Lageranordnung auftretende Reibungskräfte beeinflussbar, insbesondere einstellbar.

Beispielsweise ist im Hinblick auf eine Spezifikation, wie eine Größe, z.B. ein Durchmesser, und/oder eine Toleranz, z.B. eine Passung die erste Lageraufnahme verschieden zur zweiten Lageraufnahme. Vorstellbar ist auch, dass die erste und die zweite Lageraufnahme gleich ausgebildet sind. Z.B. sind die erste und die zweite Lageraufnahme identisch.

In einer weiteren beispielhaften Ausführungsform der Lageranordnung weist die erste Lageraufnahme ein erstes Lageraufnahmeorgan und ein zweites Lageraufnahmeorgan auf, wobei das erste Lageraufnahmeorgan am ersten Lagerorgan des Festlagers vorhanden ist und das zweite Lageraufnahmeorgan am zweiten Lagerorgan des Festlagers. Beispielsweise weist die zweite Lageraufnahme ein erstes Lageraufnahmeelement und ein zweites Lageraufnahmeelement auf, wobei das erste Lageraufnahmeelement am ersten Lagerorgan des Loslagers vorhanden ist und das zweite Lageraufnahmeelement am zweiten Lagerorgan des Loslagers. Zum Beispiel ist das erste Lageraufnahmeorgan verschieden zum ersten Lageraufnahmeelement. Vorteilhafterweise sind das erste Lageraufnahmeorgan und das ersten Lageraufnahmeelement zueinander verschieden ausgebildet und das zweite Lageraufnahmeorgan und das zweite Lageraufnahmeelement sind zueinander gleich ausgebildet, oder umgekehrt. Hierdurch sind im angeordneten Zustand der Lageranordnung auftretende Reibungskräfte beeinflussbar, insbesondere einstellbar.

Beispielsweise ist im Hinblick auf eine Spezifikation, wie eine Größe, z.B. ein Durchmesser, und/oder eine Toleranz, z.B. eine Passung das erste Lageraufnahmeorgan verschieden zum ersten Lageraufnahmeelement.

Eine beispielhafte Ausführungsform der Erfindung ist ein Wellenlager umfassend eine Welle, ein Wellenlagergehäuse und eine Lageranordnung nach einer der vorangegangen genannten Ausführungen, wobei am Wellenlagergehäuse oder an der Welle ein Anschlagsorgan vorhanden ist, wobei das zweite Federelement mit einem zweiten Ende des Federelements am Anschlagsorgan angeordnet ist, sodass das zweite Federelement zwischen dem Anschlagsorgan und dem ersten Lagerorgan des Loslagers angeordnet ist.

Beispielsweise umfasst die Welle eine Rotationsachse entlang einer axialen Erstreckung der Welle, um welche die Welle drehbar vorhanden ist. Beispielsweise ist die Welle mittels der Lageranordnung relativ zum Wellenlagergehäuse um die Rotationsachse drehbar gelagert. Beispielsweise ist die Rotationsachse des Loslagers und/oder die Rotationsachse des Festlagers parallel zu einer Rotationsachse der Welle des Wellenlagers vorhanden. Denkbar ist, dass die Rotationsachse des Loslagers, die Rotationsachse des Festlagers und die Rotationsachse der Welle im angeordneten Zustand der Lageranordnung am Wellenlager aufeinander fallen oder identisch sind.

Zum Beispiel ist das Loslager durch das erste und das zweite Federelement vorgespannt am Wellenlager vorhanden. Beispielsweise ist das erste Lagerorgan des Loslagers durch das erste und das zweite Federelement vorgespannt am Wellenlager vorhanden. Zum Beispiel ist das Loslager in axialer Richtung der Welle des Wellenlagers durch das erste und das zweite Federelement vorgespannt vorhanden. Beispielsweise sind das erste und das zweite Federelement im angeordneten Zustand am Wellenlager vorgespannt vorhanden. Hierdurch ist eine Position des Loslagers, beispielsweise eine Position des ersten Lagerorgans des Loslagers, in axialer Richtung der Welle am Wellenlager vorgebbar. Dadurch ist ein Bewegungsbereich des Loslagers, beispielsweise ein Bewegungsbereich des ersten Lagerorgans des Loslagers, in axialer Richtung der Welle am Wellenlager vorgebbar.

Beispielsweise ist das zweite Federelement am zweiten Ende mit dem Anschlagsorgan verbunden. Denkbar ist auch, dass das zweite Federelement mit dem zweiten Ende am Anschlagsorgan ansteht.

Beispielsweise ist das zweite Lagerorgan des Festlagers und/oder das zweite Lagerorgan des Loslagers unbeweglich mit der Welle oder mit dem Wellenlagergehäuse verbunden. Beispielsweise ist das zweite Lagerorgan des Festlagers und/oder das zweite Lagerorgan des Loslagers mittels einer Presspassung unbeweglich mit der Welle oder mit dem Wellenlagergehäuse verbunden.

Beispielsweise ist das erste Lagerorgan des Festlagers unbeweglich mit der Welle oder mit dem Wellenlagergehäuse verbunden. Beispielsweise ist das erste Lagerorgan des Festlagers mittels einer Presspassung unbeweglich mit der Welle oder mit dem Wellenlagergehäuse verbunden.

Beispielsweise ist das erste Lagerorgan des Loslagers beweglich an der Welle oder am Wellenlagergehäuse angeordnet. Beispielsweise ist das erste Lagerorgan des Loslagers an der Welle oder am Wellenlagergehäuse verschiebbar angeordnet. Beispielsweise ist das erste Lagerorgan des Loslagers an der Welle oder am Wellenlagergehäuse linear verschiebbar vorhanden. Zum Beispiel ist das erste Lagerorgan des Loslagers an der Welle oder am Wellenlagergehäuse in axialer Richtung der Welle verschiebbar an der Welle oder am Wellenlagergehäuse angeordnet.

Ist das erste Lagerorgan des Festlagers und das erste Lagerorgan des Loslagers an der Welle angeordnet, so ist das zweite

Lagerorgan des Festlagers und das zweite Lagerorgan des Loslagers am Wellenlagergehäuse vorhanden, oder umgekehrt.

Vorteilhafterweise ist das Anschlagsorgan unbeweglich mit der Welle oder mit dem Wellenlagergehäuse verbunden. Beispielsweise ist das Anschlagsorgan integral, z.B. einstückig, mit der Welle oder dem Wellenlagergehäuse vorhanden.

Eine beispielhafte Ausführungsform der Erfindung ist ein Gebläse mit einem Wellenlager nach einer der vorangegangen genannten Ausführungen. Beispielsweise ist das Gebläse als ein Radialgebläse, z.B. als ein Gasheizgerät, ausgebildet.

### Figurenbeschreibung

Ein Ausführungsbeispiel wird anhand der nachstehenden Zeichnung unter Angabe weiterer Einzelheiten und Vorteile näher erläutert:
Es zeigt:

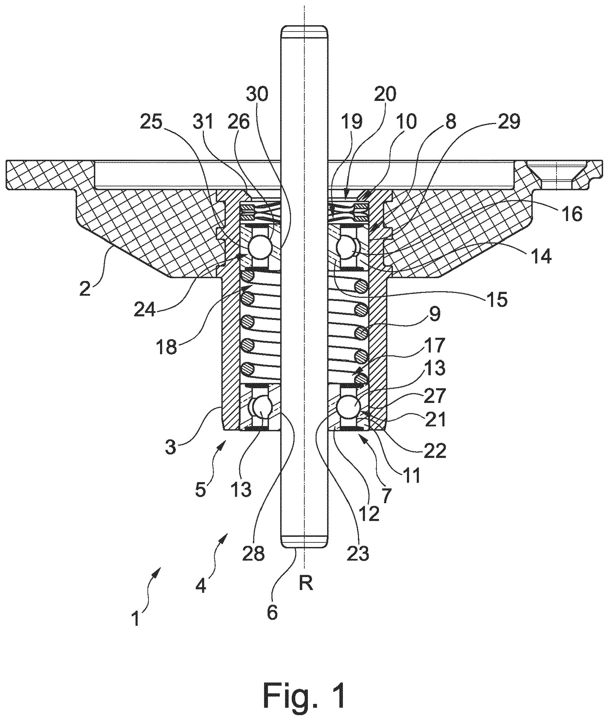

- Figur 1: ein Querschnitt eines Gebläse mit einem Wellenlager mit einer Lageranordnung.

In Figur 1 ist ein Querschnitt eines Gebläses 1 gezeigt. Das Gebläse 1 umfasst ein Gebläsegehäuse 2, ein Wellenlagergehäuse 3 und ein Wellenlager 4 mit einer Lageranordnung 5 und einer Welle 6.

Die Lageranordnung 5 umfasst ein Festlager 7, ein Loslager 8, ein erstes Federelement 9 und ein zweites Federelement 10. Das Festlager 7 weist ein erstes Lagerorgan 11, ein zweites Lagerorgan 12 und ein erstes Lagerelement 13 auf. Beispielsweise ist am Festlager 7 eine erste Lageraufnahme 21 am ersten und am zweiten Lagerorgan 12, 13 ausgebildet. Vorteilhafterweise ist die Lageraufnahme 21 als Lagerrille ausgebildet, in welcher das erste Lagerelement 13 zwischen dem ersten und dem zweiten Lagerorgan 12, 13 beweglich gelagert ist, sodass das Festlager 7 beispielsweise als ein Radialkugellager vorhanden ist. Beispielsweise ist die Lageraufnahme 21 zweiteilig ausgebildet, aufweisend ein erstes Lageraufnahmeorgan 22 und ein zweites Lageraufnahmeorgan 23.

Beispielsweise ist die Welle 6 um eine Rotationsachse R durch das Festlager 7 und das Loslager 8 relativ zum Wellenlagergehäuse 3 drehbar gelagert.

Das Loslager 8 weist ein erstes Lagerorgan 14, ein zweites Lagerorgan 15 und ein erstes Lagerelement 16 auf. Beispielsweise ist am Loslager 8 eine zweite Lageraufnahme 24 am ersten und am zweiten Lagerorgan 14, 15 ausgebildet. Vorteilhafterweise ist die Lageraufnahme 24 als Lagerrille ausgebildet, in welcher das zweite Lagerelement 16 zwischen dem ersten und dem zweiten Lagerorgan 14, 15 beweglich gelagert ist, sodass das Loslager 8 beispielsweise als ein Radialkugellager vorhanden ist. Beispielsweise ist die Lageraufnahme 24 zweiteilig ausgebildet, aufweisend ein erstes Lageraufnahmeelement 25 und ein zweites Lageraufnahmeelement 26.

Das erste Federelement 9 besitzt ein erstes Ende 17 und ein dem ersten Ende 17 gegenüberliegendes zweites Ende 18. Das zweite Federelement 10 besitzt ein erstes Ende 19 und ein dem ersten Ende 19 gegenüberliegendes zweites Ende 20. Beispielsweise steht das erste Federelement 9 mit dem ersten Ende 17, insbesondere unmittelbar, am Festlager 7 und mit dem zweiten Ende 18 am Loslager 8 an. Beispielsweise steht das zweite Federelement 10 mit dem ersten Ende 19, insbesondere unmittelbar, am Loslager 8 und mit dem zweiten Ende 20 am Anschlagsorgan 31 an.

Beispielsweise ist das erste Lagerorgan 11 des Festlagers 7 mittels einer Presspassung an einem Lagersitz 27 des Wellenlagergehäuses 3 mit dem Wellenlagergehäuse 3 positionsfest verbunden. Zum Beispiel ist das zweite Lagerorgan 12 des Festlagers 7 an einem Lagersitz 28 der Welle 6 mittels einer Presspassung mit der Welle 6 positionsfest verbunden. Beispielsweise ist das erste Lagerorgan 14 des Loslagers 8 an einem Lagersitz 29 des Wellenlagergehäuses 3 mittels einer Presspassung mit dem Wellenlagergehäuse 3 positionsfest verbunden. Vorteilhafterweise ist das zweite Lagerorgan 15 des Loslagers 9 an einem Lagersitz 30 der Welle 6 verschieblich an der Welle 6 gelagert. Beispielsweise ist das zweite Lagerorgan 15 relativ zur Welle 6 linear verschieblich an der Welle 6 gelagert. Zum Beispiel ist das zweite Lagerorgan 15 relativ zur Welle 6 in einer Richtung parallel zur Rotationsachse der Welle 6 verschiebbar vorhanden.

Beispielsweise ist am Wellenlagergehäuse 3 ein Anschlagsorgan 31 ausgebildet. Das Anschlagsorgan 31 bildet vorteilhafterweise ein Widerlager für das zweite Federelement 10. Denkbar ist auch, dass das Anschlagsorgan anstatt am Wellenlagergehäuse 3 an der Welle 6 vorhanden ist (nicht gezeigt).

**Bezugszeichenliste**

| | | | |
|---|---|---|---|
| 1 | Gebläse | 17 | Ende |
| 2 | Gebläsegehäuse | 18 | Ende |
| 3 | Wellenlagergehäuse | 19 | Ende |
| 4 | Wellenlager | 20 | Ende |
| 5 | Lageranordnung | 21 | Lageraufnahme |
| 6 | Welle | 22 | Lageraufnahmeorgan |
| 7 | Festlager | 23 | Lageraufnahmeorgan |
| 8 | Loslager | 24 | Lageraufnahme |
| 9 | Federelement | 25 | Lageraufnahmeelement |
| 10 | Federelement | 26 | Lageraufnahmeelement |
| 11 | Lagerorgan | 27 | Lagersitz |
| 12 | Lagerorgan | 28 | Lagersitz |
| 13 | Lagerelement | 29 | Lagersitz |
| 14 | Lagerorgan | 30 | Lagersitz |
| 15 | Lagerorgan | 31 | Anschlagsorgan |
| 16 | Lagerelement | | |

## Patentansprüche

1. Lageranordnung (5) umfassend ein Festlager (7), ein Loslager (8), ein erstes Federelement (9) und ein zweites Federelement (10), wobei das Festlager (7) ein erstes Lagerorgan (11), ein zweites Lagerorgan (12) und ein erstes Lagerelement (13) umfasst, wobei das erste Lagerelement (13) zwischen dem ersten und dem zweiten Lagerorgan (11, 12) des Festlagers (7) beweglich gelagert ist, wobei das Loslager (8) ein erstes Lagerorgan (14), ein zweites Lagerorgan (15) und ein zweites Lagerelement (16) umfasst, wobei das zweite Lagerelement (16) zwischen dem ersten und dem zweiten Lagerorgan (14, 15) des Loslagers (8) beweglich gelagert ist, wobei das erste Federelement (9) ein erstes Ende (17) und ein dem ersten Ende (17) gegenüberliegendes zweites Ende (18) aufweist, wobei das erste Federelement (9) zwischen dem ersten Lagerorgan (11) des Festlagers (7) und dem ersten Lagerorgan (14) des Loslagers (8) angeordnet ist und mit dem ersten Ende (17) am ersten Lagerorgan (11) des Festlagers (7) und mit dem zweiten Ende (18) am ersten Lagerorgan (14) des Loslagers (8) angreift, wobei das zweite Federelement (10) ein erstes Ende (19) aufweist und mit dem ersten Ende (19) am ersten Lagerorgan (14) des Loslagers (8) angreifend angeordnet ist, wobei das Loslager (8) zwischen dem ersten Federelement (9) und dem zweiten Federelement (10) vorhanden ist, sodass die beiden Federelemente (9, 10) gegenüberliegend und voneinander beabstandet vorhanden sind.

2. Lageranordnung (5) nach einem der vorangegangenen Ansprüche, **dadurch gekennzeichnet, dass** eine Federkonstante des ersten Federelements (9) größer ist, als eine Federkonstante des zweiten Federelements (10).

3. Lageranordnung (5) nach einem der vorangegangenen Ansprüche, **dadurch gekennzeichnet, dass** im angeordneten Zustand der Lageranordnung (5) eine Kraft des ersten Federelements (9) auf das erste Lagerorgan (14) des Loslagers (8) größer ist, als eine Kraft des zweiten Federelements (10) auf das erste Lagerorgan (14) des Loslagers (8).

4. Lageranordnung (5) nach einem der vorangegangenen Ansprüche, **dadurch gekennzeichnet, dass** im angeordneten Zustand der Lageranordnung (5) die Kraft des ersten Federelements (9) auf das erste Lagerorgan (14) des Loslagers (8) und die Kraft des zweiten Federelements (10) auf das erste Lagerorgan (14) des Loslagers (8) entgegengesetzt gerichtet vorhanden sind.

5. Lageranordnung (5) nach einem der vorangegangenen Ansprüche, **dadurch gekennzeichnet, dass** das erste Lagerelement (13) und/oder das zweite Lagerelement (16) als eine Kugel eines Kugellagers ausgebildet ist.

6. Lageranordnung (5) nach einem der vorangegangenen Ansprüche, **dadurch gekennzeichnet, dass** das erste Lagerelement (13) zum zweiten Lagerelement (14) verschieden ist.

7. Lageranordnung (5) nach einem der vorangegangenen Ansprüche, **dadurch gekennzeichnet, dass** eine erste Lageraufnahme (21) des ersten und des zweiten Lagerorgans (11, 12) des Festlagers (7) verschieden ist, zu einer zweiten Lageraufnahme (24) des ersten und des zweiten Lagerorgans (14, 15) des Loslagers (8), wobei in der ersten Lageraufnahme (21) das erste Lagerelement (13) gelagert ist, wobei in der zweiten Lageraufnahme (24) das zweite Lagerelement (16) gelagert ist.

8. Lageranordnung (5) nach einem der vorangegangenen Ansprüche, **dadurch gekennzeichnet, dass** die erste Lageraufnahme (21) ein erstes Lageraufnahmeorgan (22) und ein zweites Lageraufnahmeorgan (23) aufweist, wobei das erste Lageraufnahmeorgan (2) am ersten Lagerorgan (11) des Festlagers (7) vorhanden ist und das zweite Lageraufnahmeorgan (22) am zweiten Lagerorgan (12) des Festlagers (7), wobei die zweite Lageraufnahme (24) ein erstes Lageraufnahmeelement (25) und ein zweites Lageraufnahmeelement (26) aufweist, wobei das erste Lageraufnahmeelement (26) am ersten Lagerorgan (14) des Loslagers (8) vorhanden ist und das zweite Lageraufnahmeelement (26) am zweiten Lagerorgan (15) des Loslagers (8), wobei das erste Lageraufnahmeorgan (22) verschieden ist zum ersten Lageraufnahmeelement (25).

9. Wellenlager (4) umfassend eine Welle (6), ein Wellenlagergehäuse (3) und eine Lageranordnung (5) nach einem der vorangegangenen Ansprüche, wobei am Wellenlagergehäuse (3) oder an der Welle (6) ein Anschlagsorgan (31) vorhanden ist, wobei das zweite Federelement (10) mit einem zweiten Ende (20) des zweiten Federelements (10) am Anschlagsorgan (31) angeordnet ist, sodass das zweite Federelement (10) zwischen dem Anschlagsorgan (31) und dem ersten Lagerorgan (14) des Loslagers (8) angeordnet ist.

10. Gebläse (1) mit einem Wellenlager (4) nach dem vorangegangenen Anspruch 9.
